# FASCICULE DE BREVET EUROPEEN

(11) **EP 0 796 499 B1**
(45) Date de publication et mention de la délivrance du brevet: **16.02.2000**
(21) Numéro de dépôt: 95941747.8
(22) Date de dépôt: 01.12.1995
(51) Int. Cl.: H01H 1/02

(54) **PINCE DE CONNEXION SUR JEU DE BARRES POUR DISJONCTEUR OU SYSTEME MULTIPOLAIRE DEBROCHABLE**
ANSCHLUSSKLEMME AUF SAMMELSCHIENEN FÜR LASTSCHALTER ODER MEHRPOLIGE TRENNBARE SYSTEME
CLIP FOR CONNECTING CIRCUIT BREAKER OR DETACHABLE MULTIPOLAR SYSTEM TO BUSBAR

(30) Priorité: 06.12.1994 FR 9414883
(43) Date de publication de la demande: 24.09.1997
(73) Titulaire: Schneider Electric Industries SA, 92100 Boulogne Billancourt (FR)
(72) Inventeur: BEDROSSIAN, Antoine, F-38330 Biviers (FR); LEPRETRE, Pascal, F-73800 Les Marches (FR); MOREL, Robert, F-38320 Eybens (FR); VELLETAZ, Gilbert, F-73250 Saint-Pierre-d'Albigny (FR); RODRIGUEZ, Pascale, F-38920 Crolles (FR); LANGLOIS, Philippe, F-38840 Saint-Lattier (FR)
(74) Mandataire: Ritzenthaler, Jacques
(86) Numéro de dépôt international: FR9501582
(87) Numéro de publication internationale: WO9618199

(56) Documents cités:
- EP-A- 0 208 565
- US-A- 5 236 628

## Description

La présente invention concerne une pince de connexion destinée par exemple à relier électriquement l'une des plages de contact d'un disjoncteur à une plage de raccordement à un jeu de barres ou analogue, ladite pince comprenant au moins une paire de doigts de contact opposés conformés en pont et réalisés en un matériau conducteur, les deux doigts de chaque paire comportant chacun deux contacts d'extrémité par lesquels ils sont en appui sur les deux faces opposées des deux plages précitées en étant sollicités élastiquement l'un vers l'autre par l'action d'éléments élastiques coopérant avec lesdits doigts de contact.

Une pince d'embrochage du genre précédemment mentionné est décrite dans le document de brevet FR-2.583.217 de la demanderesse. Actuellement, les doigts de contact sont réalisés en cuivre et sont recouverts d'un revêtement constitué d'argent pur ou bien d'étain. Or les pinces d'embrochage constituées de cette façon présentent un certain nombre d'inconvénients. L'un de ces inconvénients tient en ce que, en cas de court-circuit, il se produit souvent un phénomène de fusion entre les contacts d'extrémité des doigts et les plages, pouvant conduire à la soudure des pièces en contact. Un autre de ces inconvénients tient en ce que ces pinces nécessitent lors de la connexion un effort d'embrochage important. Enfin, lorsqu'elles comportent plusieurs paires de doigts de contact juxtaposées, on observe que ces doigts accolés ne sont pas parfaitement indépendants, d'où il résulte une altération de la qualité du contact entre les doigts et les plages.

La présente invention résout ces problèmes et propose une pince de connexion comportant une ou plusieurs paires de doigts de contact, pour laquelle les risques de soudure aux points de contacts sont considérablement réduits, tout comme les efforts d'embrochage, les doigts de contact étant en outre parfaitement indépendants.

A cet effet, la présente invention a pour objet une pince de connexion caractérisée en ce que les doigts de contact précités comportent, au moins sur leurs contacts d'extrémités, un revêtement contenant du graphite de manière à assurer une lubrification des parties recouvertes qui facilite l'embrochage de la pince tout en diminuant les risques de soudure au niveau des points de contacts.

Selon une caractéristique particulière de l'invention, ladite pince comportant plusieurs paires de doigts de contact juxtaposées, les faces latérales des doigts sont également recouvertes, au moins en partie, du revêtement précité afin de diminuer le frottement entre les deux surfaces en vis à vis de deux doigts accolés.

Selon une réalisation particulière de l'invention, la totalité de la surface des doigts est recouverte du revêtement précité.

Selon une autre caractéristique, le revêtement précité est obtenu par voie électrolytique.

Avantageusement, le revêtement précité comprend un alliage d'argent et de graphite.

Selon une autre caractéristique avantageuse, le revêtement précité comprend environ 2% de carbone.

Selon une autre caractéristique, l'épaisseur du revêtement est d'environ 5µm.

Selon une autre caractéristique, les doigts de contact, préalablement au dépôt du revêtement , sont réalisés en cuivre.

Selon une autre caractéristique, les deux doigts de chaque paire, comprennent respectivement deux faces centrales internes en vis à vis très rapprochées, ces faces s'étendant sensiblement sur toute la longueur séparant les deux plages.

Mais d'autres avantages et caractéristiques de l'invention apparaîtront mieux dans la description détaillée qui suit et se réfère aux dessins annexés donnés uniquement à titre d'exemple et dans lesquels :

La figure 1 est une vue partielle en élévation, d'une réalisation particulière d'une pince de connexion conforme à l'invention.

La figure 2 en est une vue de dessus.

Sur les figures, on voit une pince d'embrochage P destinée à relier électriquement l'une des plages de contact 1 d'un disjoncteur multipolaire basse tension du type débrochable à une plage de raccordement 2 à un jeu de barres (non représenté). Ce disjoncteur basse tension est déplaçable en translation bidirectionnelle entre deux positions de fin de course d'embrochage et d'extraction, grâce à l'actionnement d'un mécanisme auxiliaire de commande non représenté.

Cette pince d'embrochage P comporte une pluralité de paires 3 de doigts de contact élémentaires opposés 4, 5 coopérant avec des ressorts de compression sous forme de lame 6, 7, disposés de chaque côté des doigts 4, 5, l'ensemble étant agencé à l'intérieur d'un cadre de connexion 8. Chaque doigt de contact élémentaire 4, 5 est conformé en pont en matériau conducteur, de préférence le cuivre, s'étendant selon la direction longitudinale d'embrochage et comprenant deux contacts d'extrémité 14, 15 et 16, 17. Ces contacts d'extrémité 14 à 17 des deux doigts, sont destinés à venir en appui respectivement sur les deux faces opposées la, 2a; 1b, 2b des deux plages 1 et 2.

Les doigts de contact opposés 4, 5 de chaque paire 3 sont sollicités élastiquement l'un vers l'autre par l'action de compression des ressorts 6, 7, en ménageant à chaque bout de la pince P, un intervalle i, j entre les protubérances des contacts d'extrémités 14 à 17. L'intervalle i autorise la fixation de la pince P sur la plage de raccordement précité 2, tandis que l'intervalle opposé j est destiné à l'embrochage de la plage de contact correspondante 1 du disjoncteur lors de la translation de ce dernier.

Selon une réalisation particulière de l'invention, ces doigts de contact 4, 5 sont soumis à un traitement électrolytique par lequel ils sont recouverts totalement d'une couche d'un revêtement 10 constituée principalement d'un alliage contenant du graphite (ou carbone). Avantageusement, cet alliage sera un alliage argent / graphite, la teneur en carbone de ce revêtement 10 sera de 2% et l'épaisseur du revêtement 10 de 5µm. La présence de ce revêtement permet l'obtention d'une surface extérieure lubrifiée des doigts de contact 4, 5.

Ainsi, grâce à ces caractéristiques, les mises en place successives de la pince d'embrochage P sur la plage de raccordement 2 et de la plage de contact 1 du disjoncteur à l'intérieur de la pince P, nécessitent un effort d'embrochage moins important sans apport de graisse. Il en est de même pour le démontage de la pince P.

En fonctionnement, lors du passage du courant à travers la Pince P, les risques de soudure aux points de contact entre les doigts 4, 5 et les plages 1, 2 sont particulièrement réduits du fait de la présence de carbone à la surface des doigts 4, 5.

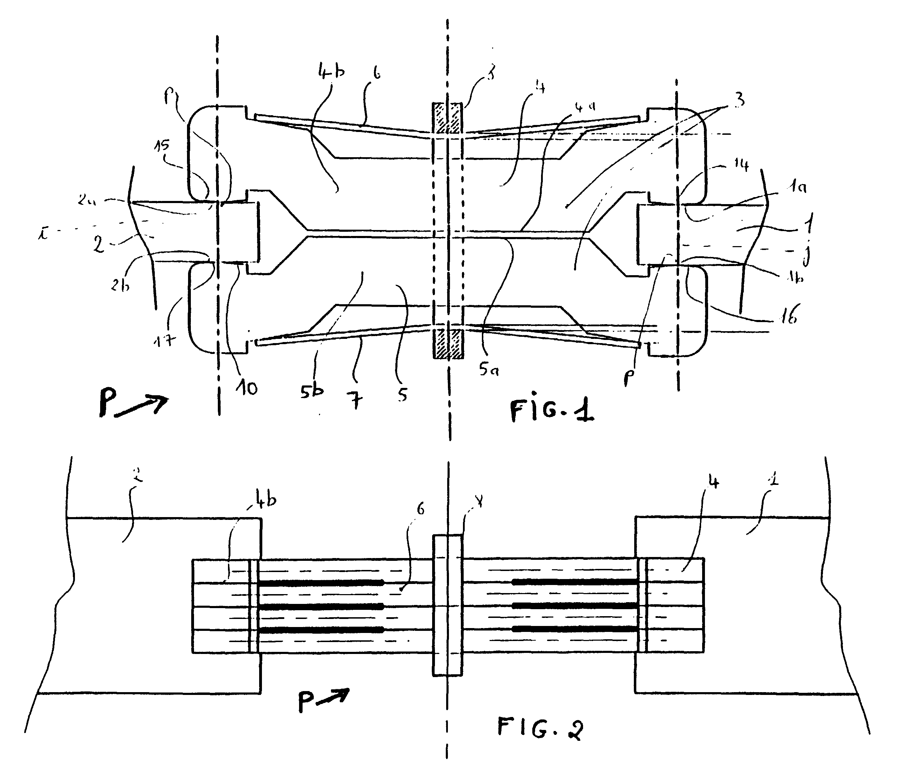

Lorsque la pince P est une pince multi-contacts et comporte plusieurs paires 3 de doigts de contact 4, 5, par exemple quatre comme illustré sur la figure 2, la présence de ce revêtement 10 sur les faces latérales 4b, 5b des doigts 4, 5 permet de réduire considérablement le frottement entre deux doigts juxtaposés 4, 5. Il en résulte que, ces derniers étant plus indépendants, cela favorise un nombre important de points de contact sur toute la durée du court-circuit, améliorant de ce fait la qualité de la connexion électrique.

On notera en outre en se référant plus particulièrement à la figure 1, que les doigts de contact 4, 5 comprennent respectivement deux faces centrales internes 4a, 5a en vis à vis très rapprochées. Ces faces s'étendent sensiblement sur toute la longueur séparant la plage de raccordement 2 de la plage de contact 1. Cette disposition permet un rapprochement des filets de courant parcourant les doigts opposés 4, 5, ce rapprochement engendrant des efforts électrodynamiques d'attraction des doigts de manière à compenser les forces de répulsion s'exerçant au niveau des points de contact p lors du passage du courant.

On a donc réalisé grâce à l'invention une pince de connexion, dont la mise en place est facilitée, qui permet de repousser les limites définies par les problèmes de soudure aux points de contact, d'améliorer la qualité du contact et de là, la qualité de la connexion électrique.

## Revendications

1. Pince de connexion du genre destinée à relier électriquement l'une des plages de contact (1) d'un disjoncteur à une plage de raccordement (2) à un jeu de barres ou analogue, ladite pince comprenant plusieurs paires (3) de doigts de contact opposés (4, 5) en forme de pont et réalisés en un matériau conducteur, les deux doigts (4, 5) de chaque paire comportant chacun deux contacts d'extrémités (14 à 17) par lesquels ils sont respectivement en appui sur les deux faces opposées des deux plages précitées en étant sollicités élastiquement l'un vers l'autre par l'action d'éléments élastiques (6, 7) coopérant avec lesdits doigts (4, 5),
caractérisée en ce que les doigts de contact précités (4, 5) comportent, sur leurs contacts d'extrémités (14 à 17), un revêtement (10) contenant du graphite de manière à assurer une lubrification des contacts facilitant l'embrochage de la pince (P) tout en diminuant les risques de soudure et en ce que les faces latérales (4b, 5b) des doigts (4, 5) sont également recouvertes, au moins en partie, du revêtement précité (10), afin de diminuer le frottement entre les deux surfaces en vis à vis de deux doigts accolés (4, 5)

2. Pince de connexion selon la revendication 1, caractérisée en ce que la totalité de la surface des doigts (4, 5) est recouverte du revêtement précité (10.

3. Pince de connexion selon la revendication 1 ou 2, caractérisée en ce que le revêtement précité (10) est obtenu par voie électrolytique.

4. Pince de connexion selon l'une quelconque des revendications précédentes, caractérisée en ce que le revêtement précité (10) comprend un alliage d'argent et de graphite.

5. Pince de connexion selon l'une quelconque des revendications précédentes, caractérisée en ce que le revêtement précité (10) comprend environ 2% de carbone.

6. Pince de connexion selon l'une quelconque des revendications précédentes, caractérisée en ce que l'épaisseur du revêtement (10) est d'environ 5µm.

7. Pince de connexion selon l'une quelconque des revendications précédentes, caractérisée en ce que les doigts de contact (4, 5), préalablement au dépôt du revêtement (10), sont réalisés en cuivre.

8. Pince de connexion selon l'une quelconque des revendications précédentes, caractérisée en ce que les deux doigts (4, 5) de chaque paire (3), comprennent respectivement deux faces centrales internes (4a, 5a) en vis à vis très rapprochées, ces faces (4a, 5a) s'étendant sensiblement sur toute la longueur séparant les deux plages (1, 2).

## Patentansprüche

1. Kontaktzange, die bauartgemäß zur elektrischen Verbindung eines der Anschlußstücke (1) eines Leistungsschalters mit einem zum Anschluß an eine Sammelschiene o.ä. dienenden Anschlußstück (2) dient, wobei die genannte Kontaktzange mehrere Paare (3) einander gegenüberliegender, brückenförmiger Kontaktfinger (4, 5) aus einem Leiterwerkstoff aufweist und die beiden Finger (4, 5) jedes Kontaktfingerpaars jeweils zwei Endkontakte (14 bis 17) aufweisen, mit denen sie jeweils auf den beiden einander gegenüberliegenden Seiten der beiden genannten Anschlußstücke aufliegen und dabei durch die Wirkung biegsamer, mit den genannten Kontaktfingern (4, 5) zusammenwirkender Elemente (6, 7) elastisch gegeneinander geführt werden,
dadurch gekennzeichnet, daß die genannten Kontaktfinger (4, 5) an ihren Endkontakten (14 bis 17) mit einer graphithaltigen Beschichtung (10) versehen sind, derart daß eine Schmierung der Kontakte gewährleistet wird, die das Aufstecken der Zange (P) erleichtert und gleichzeitig die Gefahr eines Verschweißens vermindert, und daß die Seitenflächen (4b, 5b) der Finger (4, 5) zumindest teilweise ebenfalls mit der genannten Beschichtung (10) versehen sind, um die Reibung zwischen den beiden einander gegenüberliegenden Flächen zweier benachbarter Finger (4, 5) zu verringern.

2. Kontaktzange nach Anspruch 1, dadurch gekennzeichnet, daß die gesamte Oberfläche der Kontaktfinger (4, 5) mit der genannten Beschichtung (10) versehen ist.

3. Kontaktzange nach Anspruch 1 oder 2, dadurch gekennzeichnet, daß die genannte Beschichtung (10) auf elektrolytischem Weg aufgebracht wird.

4. Kontaktzange nach irgendeinem der vorhergehenden Ansprüche, dadurch gekennzeichnet, daß die genannte Beschichtung (10) eine Legierung aus Silber und Graphit umfaßt.

5. Kontaktzange nach irgendeinem der vorhergehenden Ansprüche, dadurch gekennzeichnet, daß die genannte Beschichtung (10) etwa 2 % Kohlenstoff enthält.

6. Kontaktzange nach irgendeinem der vorhergehenden Ansprüche, dadurch gekennzeichnet, daß die Dicke der genannten Beschichtung (10) etwa 5 µm beträgt.

7. Kontaktzange nach irgendeinem der vorhergehenden Ansprüche, dadurch gekennzeichnet, daß die Kontaktfinger (4, 5) vor dem Aufringen der Beschichtung (10) aus Kupfer gefertigt werden.

8. Kontaktzange nach irgendeinem der vorhergehenden Ansprüche, dadurch gekennzeichnet, daß die beiden Finger (4, 5) jedes Kontaktfingerpaars (3) jeweils zwei in sehr geringem Abstand einander gegenüberliegende innere Mittelflächen (4a, 5a) aufweisen, wobei sich diese Flächen (4a, 5a) annähernd über den gesamten, zwischen den beiden Anschlußstücken (1, 2) ausgebildeten Längsabstand erstrecken.

## Claims

1. A connection grip of the kind designed to electrically connect one of the contact terminal strips (1) of a circuit breaker to a terminal strip (2) for connection to a busbar or similar, said grip comprising several pairs (3) of opposite contact fingers (4, 5) in the form of a bridge and made of conducting material, the two fingers (4, 5) of each pair each comprising two end contacts (14 to 17) by means of which they are respectively pressing on the two opposite faces of the above-mentioned two terminal strips being urged elastically towards one another by the action of flexible elements (6, 7) cooperating with said fingers (4, 5),
characterized in that the above-mentioned contact fingers (4, 5) comprise, on their end contacts (14 to 17), a coating (10) containing graphite so as to provide lubrication of the contacts facilitating draw-in of the grip (P) while reducing the risks of welding and that the side faces (4b, 5b) of the fingers (4, 5) are also covered, at least partially, by the above-mentioned coating (10) in order to reduce the friction between the two facing surfaces of two adjoined fingers (4, 5).

2. The connection grip according to claim 1, characterized in that the whole of the surface of the fingers (4, 5) is covered by the above-mentioned coating (10).

3. The connection grip according to claim 1 or 2 characterized in that the above-mentioned coating (10) is obtained by electrolytic means.

4. The connection grip according to any one of the above claims, characterized in that the above-mentioned coating (10) comprises a silver and graphite alloy.

5. The connection grip according to any one of the above claims, characterized in that the above-mentioned coating (10) comprises about 2% of carbon.

6. The connection grip according to any one of the above claims, characterized in that the thickness of the coating (10) is about 5µm.

7. The connection grip according to any one of the above claims, characterized in that the contact fingers (4, 5), prior to the coating (10) being deposited, are made of copper.

8. The connection grip according to any one of the above claims, characterized in that the two fingers (4, 5) of each pair (3) respectively comprise two internal centre faces (4a, 5a) facing one another and very close together, these faces (4a, 5a) extending appreciably over the whole length separating the two terminal strips (1, 2).
